# EUROPEAN PATENT APPLICATION

(11) **EP 1 118 939 A2**
(43) Date of publication of application: **25.07.2001**
(21) Application number: 00311714.0
(22) Date of filing: 27.12.2000
(51) Int. Cl.: G06F 11/36, G06F 11/00

(54) **Software debugger user interface**

(30) Priority: 18.01.2000 GB 0000960
(71) Applicant: Mitel Semiconductor Limited, Swindon, Wiltshire SN2 2QW (GB)
(72) Inventor: Aldridge, David, Tavistock, Devon (GB); Warder, Mark, Woolwell, Plymouth PL6 7SX (GB); Hansell-Wright, Lisa, Mainstone, Plymouth PL6 8NR (GB)
(74) Representative: Lind, Robert

(57) **Abstract**

A method of debugging software arranged to run on a microcontroller for the purpose of controlling a macrocell associated with the microcontroller 1. The method comprises the steps of populating fields of a debugger application 3 using macrocell specific data read electronically from a database 4, said fields including at least a parameter name field and a parameter location field. One or more of the populated fields is displayed on a graphical user interface of the debugger application 3. User initiated debugging related instructions are relayed to the microcontroller 1 from the debugger application 3, whilst response data is received from the microcontroller 1 at the debugger application 3. The received response data is displayed to the user on the graphical user interface of the debugger application 3.

## Description

The present invention relates to software debugging and more particularly to the debugging of software arranged to run on a microcontroller for the purpose of controlling a macrocell associated with the microcontroller

A microcontroller may comprise one or more processor cores together with one or more macrocells. A macrocell is a sub-system built into a microcontroller to provide specific functionality in addition to that provided by the microprocessor itself. Macrocells are typically implemented in hardware, although in certain circumstances they may be implemented in software or in a combination of hardware and software. Examples of macrocells are Interrupt Controllers, Universal Asynchronous Receivers/Transmitters, and Timer/Counters.

When developing software for a microcontroller having one or more associated macrocells, it is often necessary to use software debugging tools to verify how the macrocell components have been configured by the software under development and, possibly, to modify the configuration "on-the-fly". The configuration of a macrocell is achieved through programming certain bit fields which are grouped into registers of the macrocell. Typically, the registers are mapped into the addressable memory space of the processor core, or into the processor core's input-output space. In either case, the processor core is able both to read from and to write to these registers in order to monitor or control the functionality of its macrocells.

In order for the developer of software intended to run on the microcontroller to be able to verify the correct operation of the software, or perhaps to modify the macrocell configuration at a certain point, the developer will use a software debugger tool. Such tools are generally specific to the processor core(s) in a microcontroller, and do not have knowledge of the macrocell components. Accordingly, to examine a certain aspect of a macrocell's configuration, the software developer will typically have to carry out the following steps:
1. Identify from the microcontroller's data sheet, the bit field that controls the macrocell functionality with which the developer is concerned. This will locate the bit field within a register. For example, in the Mitel Mvt905001 Microcontroller™, the "Timer B Run Status" bit of the Timer/Counter (TIC) macrocell is bit 17 of the Timer B Control/Status register.
2. Look up the address of the register. This step often involves adding an offset to a macrocell base address. Continuing the above example, the Timer B Control/Status register is listed as being at an offset of 0x20, and the macrocell base address is given as 0xE000E000. Accordingly, this register's address is 0xE000E020.
3. Use the debugger to read the register. For example, reading memory at the address 0xE000E020 might return 0x2c030000.
4. Interpret the value read. In the example, the Timer B Run Status is set.

A similar series of steps must be taken if the software developer wishes to modify an aspect of a macrocell's configuration. For example, the developer may wish to clear the Timer B Run Status bit. To modify a bit field, steps 1 and 2 above are repeated, and are followed by a register write operation to write the correct new value.

It will be appreciated that this process of verifying a macrocell's configuration is both error-prone and tedious. In addition, there may be "side effects" of which the user is unaware. For example, the reading of a certain register may be a destructive operation (because certain status bits are automatically cleared by the read operation), or, when writing to a register, only certain write values may be allowed. In another example, certain "polymorphic" registers may be not available under certain modes of operation.

There is described in US5,815,653 a system for debugging software and which comprises a portable debug environment-independent client debugger object and at least one non-portable server debugger object with platform specific debug logic. The client object and the server object(s) are run on respective nodes connected to a common network. This system is not intended to debug macrocell related software but rather is concerned exclusively with the debugging of microcontroller specific software. The system of US5,815,653 requires, for all debugging operations, the presence of both a server and a client object and therefore represents a relatively complex solution.

It is an object of the present invention to overcome the disadvantages of existing macrocell software debuggers noted above. It is also an object of the present invention to provide a debugging system and method which is relatively uncomplicated and which provides an easy to use interface for a human operator.

According to a first aspect of the present invention there is provided a method of debugging software arranged to run on a microcontroller for the purpose of controlling a macrocell associated with the microcontroller, the method comprising the steps of:
populating fields of a debugger application using macrocell specific data read electronically from a database, said fields including at least a parameter name field and a parameter location field;
displaying one or more of the populated fields on a graphical user interface of the debugger application;
transmitting user initiated debugging related instructions to the microcontroller from the debugger application;
receiving response data from the microcontroller at the debugger application; and
displaying the response data to the user on the graphical user interface of the debugger application.

It will be understood that the parameter name field of the debugger application contains names which can be understood by a technical user. It will also be understood that the parameter location field contains details of the locations of the parameters identified in the parameter name field, i.e. memory storage location in the microcontroller or macrocell.

Embodiments of the present invention allow the debugger application to be configured according to the specific macrocell for which software is to be debugged. This contrasts with existing solutions where debugger applications are specific only to certain microcontroller types, e.g. where a microcontroller manufacturer provides a debugger application specific to his own product(s) but where the debugger application has no knowledge of the macrocell. A user may select a first macrocell for which the appropriate fields of the debugger application are populated, and then select a second (or subsequent) macrocell for which the fields are re-populated.

Preferably, the method comprises the step of identifying the macrocell for which software is to be debugged and selecting a database (or portion of a database) corresponding to the identified macrocell, wherein said macrocell specific data can be extracted from the selected database (or database portion).

In addition to a parameter name field and a parameter location field, the debugger application may additionally comprise a parameter value field, and a parameter information field, where the former field contains the values (if any) for respective macrocell parameters and the later contains explanations of the purposes of respective macrocell parameters.

The debugger application may also obtain parameter access data from the selected database. This may include details of the read/write access which a user may have to certain parameters. It may also include warnings which can be displayed to a user if a certain parameter is selected for a read or write operation.

The database which is used to populate the debugger application may be created manually, for example by extracting data from a macrocell provider's manual and entering it into appropriate fields of the database. Alternatively, the database may be constructed "automatically" using a tool assisted translation process.

Preferably, the debugger application operates in conjunction with a standard debugger tool. More preferably, the debugger tool is used to establish a communications link with the target microcontroller and the debugger application sends and receives data over this link. Alternatively however, the debugger application may incorporate its own debugger tool.

In the case where the debugger application operates in conjunction with a standard debugger tool, the standard debugger tool and the debugger application may communicate with the target microcontroller via a shared driver. A server may be used to route traffic between the driver and the debugger tool and application. Certain instructions may be communicated from the debugger application to the target microcontroller via the debugger tool.

According to a second aspect of the present invention there is provided a system for debugging software arranged to run on a microcontroller for the purpose of controlling a macrocell associated with the microcontroller, the system comprising:
first memory means storing one or more databases containing macrocell specific data;
computer means comprising a processor and a second memory means arranged in use to implement a debugger application including at least a parameter name field and a parameter location field, the fields being populated using macrocell specific data obtained from a database;
input/output means for coupling to a microcontroller, wherein user initiated debugging related instructions may be transmitted to the microcontroller from the debugger application, and response data from the microcontroller may be received at the debugger application; and
a graphical user interface for displaying at least certain of said populated fields in addition to response data received from the microcontroller.

According to a third aspect of the present invention there is provided a computer memory encoded with executable instructions representing a computer program for causing a computer connected to a computer network to debug software arranged to run on a microcontroller for the purpose of controlling a macrocell associated with the microcontroller, the debugging operation comprising the steps of:
populating fields of a debugger application using macrocell specific data obtained from a database, said fields including at least a parameter name field and a parameter location field;
displaying one or more of the populated fields on a graphical user interface of the debugging application;
transmitting user initiated debugging related instructions to the microcontroller from the debugger application;
receiving response data from the microcontroller at the debugger application; and
displaying the response data to the user on the graphical user interface of the debugger application.

For a better understanding of the present invention and in order to show how the same may be carried into effect reference will now be made, by way of example, to the accompanying drawings, in which:
Figure 1 illustrates the graphical user interface of a debugger application displaying sample data;
Figure 2 illustrates schematically a debugger system incorporating a debugger application; and
Figure 3 is a flow diagram illustrating the method of operation of the debugger application of Figure 2.

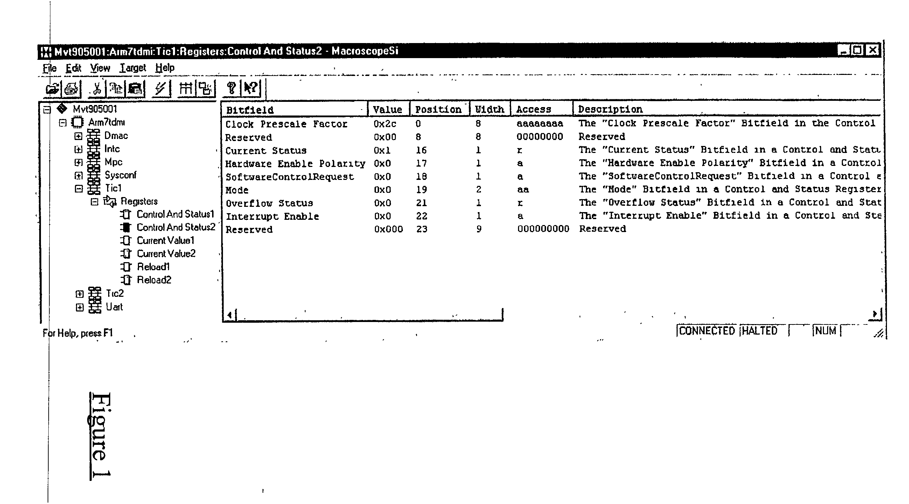

There is illustrated in Figure 1 a Windows™ style graphical user interface of a debugger application embodying the present invention. It is assumed that the application has been configured for a specific macrocell as will be described below. The left hand window of the display contains a macrocell/register tree structure for the processor of the selected microcontroller; in this case the microcontroller is an Mvt905001™ microcontroller and the processor is an Arm7tdmi™ processor. The processor has seven macrocells (Dmac to Uart) associated with it, of which the Tic1 macrocell is shown selected in Figure 1. Within the Tic1 Macrocell, the Control and Status2 register is selected. In the right hand window, the identities of the nine bit fields of the Tic1 macrocell are listed in the first column. Other columns of this window contain the values, positions, width, access rights, and descriptions of the nine bit fields.

Not shown by the graphical display (illustrated in Figure 1) are the actual locations of the bit fields in the registers of the microcontroller. These locations are invisible to the user but are maintained by the application. The debugger application therefore represents a transparent interface between the user and the macrocell bit fields.

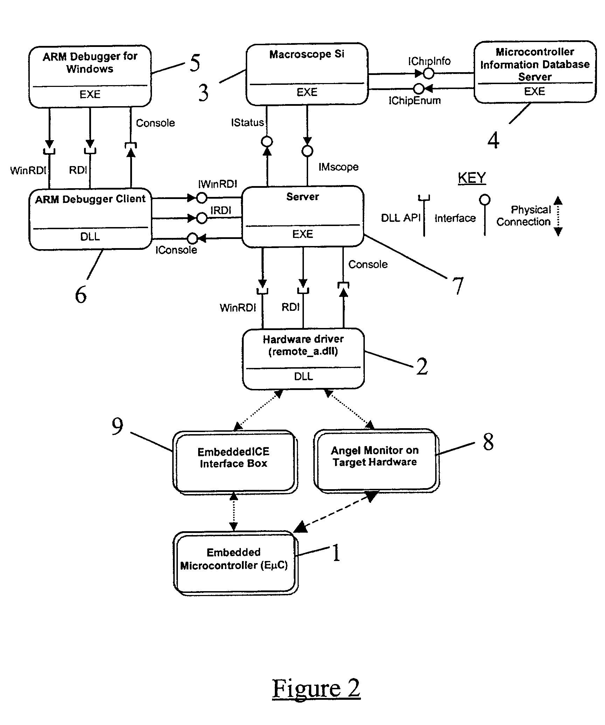

Figure 2 illustrates schematically the structure of a debugging system including the connections to a "target" microcontroller 1 having macrocell software to be debugged. The system connects to the target microcontroller 1 via a driver 2 (data being written to and read from the file "remote_a.dll") and debugging control interface 8 or 9. An essential element of the system is the debugger application 3 which produces the graphical user interface (see Figure 1). The fields of the left side windows of the user interface of the debugger application 3 are populated during a set-up phase (initiated by the user clicking on a given macrocell in the right side window) using data obtained from a Microcontroller Information Database Server 4, as well as "live" data obtained from the microcontroller 1. The Server 4 contains a database in which is stored information for each of the macrocells of the Mvt905001™ microcontroller

The debugging system incorporates an ARM™ Debugger for Windows™ (ADW) 5 which is used in conjunction with the debugger application 3. The ADW 5 allows programs to be loaded into the target microcontroller 1 as well as the sending of start and stop execution instructions thereto. This requirement to use the debugger application 3 with a target debugger 5 requires a 'Debugger Environment' to be created whereby the debugger application 3 and the target debugger 5 both communicate with the same target microcontroller 1. In effect, the debugger application 3 piggybacks on the communication link established by the ADW 5 with the target microcontroller 1.

The driver 2 used by the ADW 5 to communicate with the target microcontroller 1 exposes two DLL Application Programming Interfaces (APIs): WinRDI and RDI (the WinRDI API is directly exported, whilst the RDI API is returned through WinRDI_GetRDIProcVec). The DLL is a user-selectable item in the ADW 5, and is used to configure the debugger's connection to the target (by selecting different DLLs in the ADW 5, the user can connect to different targets). An ADW Client DLL 6 is provided to re-implement both the WinRDI and the RDI DLL APIs with versions that redirect them remotely to the Server application. The MTL remote_a.dll ADW Client DLL is used to implement the Macroscope Debugger Environment. Both the debugger application 3 and the ADW Client DLL 6 are interfaced to the driver 2 via a COM Server 7.

To support the debugger application 3, the interface IMscope is provided by the Server 7. In conjunction with this interface, the debugger application 3 provides the connection point sink interface IStatus. On the Server 7, the IMscope interface provides the following functions: ReadRegister; WriteRegister; Stop; IsInitialised, IsRunning; and QueryConnect. These functions are used by the debugger application 3 to query the status of the target microcontroller 1 and to read from and write to registers. The first two functions use the RDI DLL API in their implementation, as has been noted previously.

In order that the debugger application 3 can know about the execution status of the target microcontroller 1, the IStatus interface is employed. This interface allows the debugger application 3 to display the execution status of the target microcontroller 1, as well as allowing the debugger application 3 to prevent the user from attempting to modify registers whilst the target is executing.

The Microcontroller Information Database Server 4 is a COM server which describes to the debugger application 3 the target microcontroller's constituents. The server 4 implements the IchipInfo interface. The information obtained from the Database Server 4 is used by the debugger application 3 to configure the application's display at run-time. The Microcontroller Information Database in turn obtains its data from a SIF file. The debugger application 3 supplies this file name to the Microcontroller Information Database Server after the user has selected it for opening. The information needed to render each macrocell register in the debugger application 3 is summarised by the following list:
Macrocell Name
Macrocell Base Address
Register Name
Register Address Offset
Register Width
Bit Field Assignment
Bit Field Name
Bit Field Size
Bit Field Read Only Bit Mask
Bit Field Read Write Bit Mask
Bit Field Reserved Bit Mask
Bit Field Write Only Bit Mask

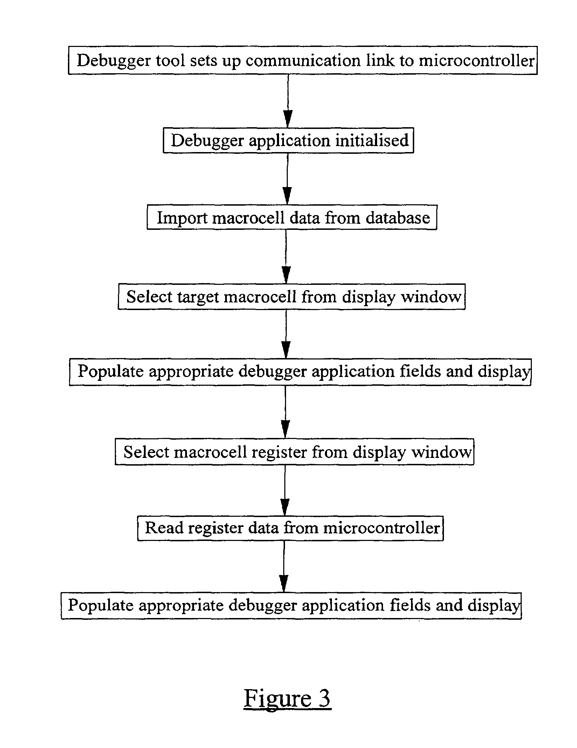

Figure 3 is a flow diagram illustrating the main steps of the method described above.

It will be appreciated that various modifications may be made to the above described embodiment without departing from the scope of the present invention. For example, whilst the invention has been illustrated above with reference to a debugging a real microcontroller, it will be appreciated that the invention may be applied to debugging an emulated microcontroller, i.e. a software simulation running on a computer workstation.

## Claims

1. A method of debugging software arranged to run on a microcontroller for the purpose of controlling a macrocell associated with the microcontroller, the method comprising the steps of:
populating fields of a debugger application using macrocell specific data read electronically from a database, said fields including at least a parameter name field and a parameter location field;
displaying one or more of the populated fields on a graphical user interface of the debugger application;
transmitting user initiated debugging related instructions to the microcontroller from the debugger application;
receiving response data from the microcontroller at the debugger application; and
displaying the response data to the user on the graphical user interface of the debugger application.

2. A method according to claim 1 and comprising the step of identifying the macrocell for which software is to be debugged and selecting a database or portion of a database corresponding to the identified macrocell, wherein said macrocell specific data can be extracted from the selected database or database portion.

3. A method according to claim 1 or 2, wherein, in addition to a parameter name field and a parameter location field, the debugger application additionally comprises a parameter value field and a parameter information field, where the former field contains the values for respective macrocell parameters and the later contains explanations of the purposes of respective macrocell parameters.

4. A method according to any one of the preceding claims, wherein the debugger application obtains parameter access data from the selected database including details of the read/write access which a user may have to certain parameters.

5. A method according to any one of the preceding claims, wherein the database which is used to populate the debugger application has been created manually.

6. A method according to any one of claims 1 to 4, wherein the database which is used to populate the debugger application has been created automatically using a tool assisted translation process.

7. A method according to any one of the preceding claims, wherein the debugger application operates in conjunction with a standard debugger tool.

8. A method according to claim 7, wherein the standard debugger tool and the debugger application communicate with the target microcontroller via a shared driver, and a server is used to route traffic between the driver and the debugger tool and application.

9. A method according to any one of claims 1 to 6, wherein the debugger application incorporates a debugger tool.

10. A method according to any one of the preceding claims, wherein the microcontroller is a software emulation.

11. A system for debugging software arranged to run on a microcontroller for the purpose of controlling a macrocell associated with the microcontroller, the system comprising:
first memory means storing one or more databases containing macrocell specific data;
computer means comprising a processor and a second memory means arranged in use to implement a debugger application including at least a parameter name field and a parameter location field, the fields being populated using macrocell specific data obtained from a database;
input/output means for coupling to a microcontroller, wherein user initiated debugging related instructions may be transmitted to the microcontroller from the debugger application, and response data from the microcontroller may be received at the debugger application; and
a graphical user interface for displaying at least certain of said populated fields in addition to response data received from the microcontroller.

12. A computer memory encoded with executable instructions representing a computer program for causing a computer connected to a computer network to debug software arranged to run on a microcontroller for the purpose of controlling a macrocell associated with the microcontroller, the debugging operation comprising the steps of:
populating fields of a debugger application using macrocell specific data obtained from a database, said fields including at least a parameter name field and a parameter location field;
displaying one or more of the populated fields on a graphical user interface of the debugging application;
transmitting user initiated debugging related instructions to the microcontroller from the debugger application;
receiving response data from the microcontroller at the debugger application; and
displaying the response data to the user on the graphical user interface of the debugger application.
